## Europäisches Patentamt

## European Patent Office

## Office européen des brevets

(11) Veröffentlichungsnummer: **0 294 002**

**A1**

(12) **EUROPÄISCHE PATENTANMELDUNG**

(21) Anmeldenummer: **88201115.8**

(22) Anmeldetag: **02.06.88**

(51) Int. Cl.⁴: **B01D 21/24**

(30) Priorität: **04.06.87 DE 3718670**

(43) Veröffentlichungstag der Anmeldung:
**07.12.88 Patentblatt 88/49**

(84) Benannte Vertragsstaaten:
**BE CH DE LI NL**

(71) Anmelder: **NORDDEUTSCHE AFFINERIE AG**
**Alsterterrasse 2**
**D-2000 Hamburg 36(DE)**

(72) Erfinder: **Bartsch, Adalbert**
**Hermannstrasse 22**
**D-2091 Marxen(DE)**

(74) Vertreter: **Rieger, Harald, Dr.**
**Reuterweg 14**
**D-6000 Frankfurt a.M.(DE)**

(54) **Vorrichtung zur Entnahme von geklärtem Wasser aus insbesondere Absetzbecken.**

(57) Vorrichtung zur Entnahme von geklärtem Wasser aus Gewässern, insbesondere aus Absetzbecken, wobei ein durch Auftriebkörper schwimmfähig gehaltener Entnahmebehälter in das Wasser eingetaucht und von einer ringförmigen Tauchwand in kleinem Abstand umgeben ist, wobei das geklärte Wasser aus oberflächennahen Schichten durch Öffnungen in oberflächennahen Zonen der Behälterwand in den Entnahmebehälter einströmt und mittels zentral angeordneter Pumpe hieraus entfernt wird. Zwecks einer verbesserten, turbulenzfreien Entnahme der geklärten oberflächennahen Wasserschicht ist der Entnahmebehälter als ein durch höhenverstellbare Schwimmkörper in horizontaler Schwimmlage stabilisierter, flut- und lenzbarer kalottenförmiger Hohlkörper ausgebildet. Der kalottenförmige Hohlkörper ist über am Gewässerboden aufsitzende Führungsstative und Führungshülsen höhenverstellbar und selbsttätig dem Niveau anpassend angeordnet.

## Vorrichtung zur Entnahme von geklärtem Wasser aus insbesondere Absetzbecken

Die Erfindung betrifft eine Vorrichgung zur Entnahme von geklärtem Wasser aus Gewässern, insbesondere Absetzbecken.

Es ist bekannt, das geklärte Wasser von Absetzbecken, wie Vor- und Nachklärbecken von Kläranlagen, Schönungsteichen als Überlaufwasser in einem Schacht aufzufangen und einer weiteren Verwendung als Brauchwasser zuzuführen. Aus DE-OS 28 14 233 ist eine Einrichtung zur Entnahme von Brauchwasser aus oberflächennahen Wasserschichten von Absetzbecken bekannt. Bei der vorbekannten Entnahmeeinrichtung taucht ein durch Auftriebkörper schwimmfähig gehaltener Entnahmebehälter in das Wasser in der Weise ein, daß das Wasser aus der Klarwasserzone durch Öffnungen oder über die Überfallkante eines flachzylindrischen, mit konischem Bodenteil ausgerüsteten Entnahmebehälters einströmt. Eine im konischen Bodenteil installierte Pumpe sorgt für Entnahme und Nachströmen. Nachteilig ist die große Bauhöhe der vorbekannten Einrichtung sowie deren Instabilität.

Der Erfindung liegt die Aufgabe zugrunde, die insbesondere vorgenannten Nachteile zu vermeiden und eine Vorrichtung bereitzustellen, die es ermöglicht, geklärtes Wasser aus Gewässern oder Absetzbecken mehr oder weniger dicht unter der Oberfläche zu entnehmen wie auch auf Wasser aufschwimmbare flüssige Stoffe bzw. Verunreinigungen abzuziehen.

Die Erfindung löst die Aufgabe mit einer Vorrichtung der vorgenannten Art. Bei einer Vorrichtung zur Entnahme von geklärtem Wasser aus Gewässern, insbesondere aus Absetzbecken, wobei ein durch Auftriebkörper schwimmfähig gehaltener Entnahmebehälter in das Wasser eingetaucht und von einer ringförmigen Tauchwand in kleinem Abstand umgeben ist, und wobei das geklärte Wasser aus oberflächennahen Schichten durch Öffnungen in oberflächennahen Zonen der Behälterwand in den Entnahmebehälter einströmt und mittels zentral angeordneter Pumpe hieraus entfernt wird, besteht die Erfindung darin, daß der Entnahmebehälter ein durch höhenverstellbare Schwimmkörper in horizontaler Schwimmlage stabilisierter, flut- und lenzbarer kalottenförmiger Hohlkörper ist. Mit den höhenverstellbaren Schwimmkörpern, von denen zweckmäßig drei Körper gleichmäßig verteilt um die Vorrichtung angeordnet sind, wird die exakte Justierung der Vorrichtung in der horizontalen Schwimmlage vorgenommen. Auf diese Weise können unterschiedliche Belastungen durch z.B. einseitige Aufbauten leicht ausgeglichen und die horizontale Schwimmlage eingestellt werden. Gleichzeitig wird auch eine Grobeinstellung für die Schwebetiefe der Vorrichtung vorgenommen. Die Feineinstellung der Schwebetiefe, d.h. die Lage der Überlaufkante bzw. der Einlauflöcher der Überlaufkante, erfolgt hingegen über Fluten (Absenken) bzw. Lenzen (Anheben) des kalottenförmigen Hohlkörpers. Für das Fluten und Lenzen besitzt die Vorrichtung geeignete Einrichtungen. Im einfachsten Fall handelt es sich um mit Pumpenanschluß versehene Leitungsrohre für Wasser, die im Abdeckboden eingeschweißt sind und möglichst an der tiefsten Stelle des Innenraumes enden, sowie um rohrförmige Leitungen für Luft bzw. Druckluft, die ebenfalls im Abdeckboden eingeschweißt sind und direkt unterhalb des Abdeckbodens enden. Die Leitungen sind durch geeignete Ventile absperrbar. Beim Fluten dringt das Wasser in den Hohlkörper ein und verdrängt die entsprechende Menge Luft. Durch Schließen der Ventile wird die gewünschte Schwebehöhe eingehalten. Beim Lenzen wird das Wasser entweder durch Aufdrücken von Preßluft wieder über die Wasserzuleitungen durch geeignete Ventilstellung herausgedrückt oder aber das Wasser kann über die Zuleitungen abgepumpt werden, wobei Luft in den Hohlkörper nachströmt. Auch hier wird durch Schließen der Ventile die gewünschte Schwebehöhe eingehalten.

Zur Schwallverminderung bzw. zur Vermeidung von Pendelausschlägen sind im Innenraum des kalottenförmigen Hohlkörpers vertikale und mit Durchlaßöffnungen versehene konzentrische Ringbleche angeordnet. Die Ringbleche sind an der Innenwandung der Kalotte fixiert, z.B. durch Schweißung.

Zur exakten Standorteinhaltung der Vorrichtung der Erfindung sind mindestens drei, am Gewässer- oder Beckenboden aufsitzende Führungsstative bzw. Rohrstative mit schwerem Fuß, wie Betonscheiben, angeordnet. Die Führungsstative greifen in eine entsprechende Zahl von Führungshülsen ein, die an dem kalottenförmigen Hohlkörper seitlich angebracht sind. Auf diese Weise ist der schwimmfähige kalottenförmige Hohlkörper gegen seitliche Verschiebungen und gegen Einwirkung von Kippmomenten auf die senkrechte Mittelachse gesichert, und die Vorrichtung kann andererseits selbsttätig der Änderung des Flüssigkeitsspiegels folgen. Der kalottenförmige Hohlkörper ist nach oben hin durch einen Stahlboden abgedeckt, der sich zur Mitte hin neigt und quasi in Form eines flachen Trichters verläuft. Der Stutzen des flachen Trichters ist konzentrisch um die vertikale Mittelachse der Vorrichtung als zylinderförmiger Teil angeordnet, sitzt bündig auf der Innenwand der Kalottenschale auf und ist mit dieser wasserdicht verschweißt. Der zylinderförmige Teil ist mit dem Abdeckboden ebenfalls luft- und wasserdicht verschweißt. Gleichermaßen ist der Abdeckboden mit
dem Rand der Kalottenschale luft- und wasserdicht
verschweißt. Der zylinderförmige Teil dient als
Flüssigkeitssumpf und ferner der Aufnahme einer
Pumpe, die als Unterwasserpumpe ausgelegt ist.

Zwecks weiterer Stabilisierung des -
schwimmfähigen kalottenförmigen Hohlkörpers ist
im Bereich des tiefsten Punktes der Kugelkalotte
an der Außenwand eine Trimmeinrichtung angebracht, in aller Regel ein metallisches Trimmgewicht, beispielsweise aus Blei. Zweckmäßig handelt
es sich um einen flachzylindrischen Stahlbehälter
mit Bleifüllung, der mit der äußeren Kalottenwand
verschweißt ist. Am tiefsten Punkt der Kalotte ist
ferner in der Wand eine kreisförmige Öffnung angeordnet, die dem kommunizierenden Ausgleich
der Flüssigkeitsstände außerhalb und innerhalb der
Vorrichtung dient und die ferner auch ein Trockenlaufen der Pumpe bei Absaugebeginn verhindert.

Der Abdeckboden des kalottenförmigen Hohlkörpers ragt über die Kalottenschale hinaus und
besitzt in der Randzone eine Aufkrempung, die
mindestens stellenweise gezahnt oder mit Öffnungen versehen ist. Auf diese Weise wird ein gleichmäßiges Überströmen der Flüssigkeit von außen in
das Zentrum der Vorrichtung gewährleistet.

Zur Abweisung fester schwimmfähiger Materialien auf der Wasseroberfläche ist in an sich bekannter Weise ein tiefeneinstellbarer Tauchwehrring in
gewissem Abstand um die Aufkrempung angeordnet. Um einer Vereisung bei tiefen Außentemperaturen entgegenzuwirken, ist die Vorrichtung der Erfindung schließlich noch mit einer Heizeinrichtung,
wie Rohrschlange, ausgestattet, die den Hohlraum
der Vorrichtung in geeigneter Weise erwärmt.

Die Vorrichtung der Erfindung wird in überwiegendem Maße zur Entnahme von geklärtem Wasser aus Gewässern und Teichen, insbesondere Absetzbecken, verwendet. Sie kann aber auch angewendet werden, um auf Wasser aufschwimmbare
flüssige Stoffe von der Oberfläche abzutrennen,
beispielsweise aufschwimmende Öle oder andere
aufschwimmende organische Flüssigkeiten.

In solchem Fall kann bei entsprechender Einstellung der Überlaufschichtdicke ohne vorgeschaltetes Tauchwehr die z.B. Ölschicht mit geringstem Wasseranteil abgezogen werden. In Kombination mit einem Separator und Öl-Transportbehälter
kann die Vorrichtung der Erfindung für den Noteinsatz bereitgestellt werden.

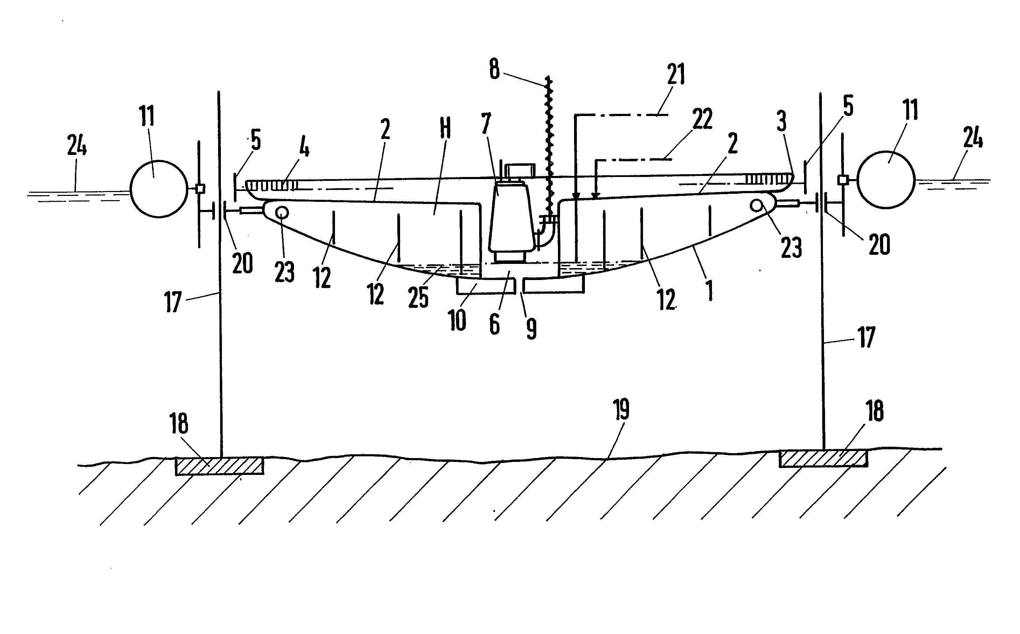

Die Erfindung wird anhand der Figur der Abbildung näher erläutert.

Der nach dem Prinzip eines Schwimmdocks
arbeitende flut- und lenzbare kalottenförmige Hohlkörper (H) wird durch einen gewölbten Stahlboden
(1) mit aufgeschweißtem oberen, leicht zum Zentrum abfallendem Flachboden (2) gebildet. Der Flachboden (2) besitzt als äußeren Rand eine Aufkrempung (3) mit Zahnung (4) für das gleichmäßige Über- bzw. Einströmen des Wassers. Zur Abweisung fester schwimmfähiger Stoffe auf der
Wasseroberfläche (24) ist ein tiefeneinstellbarer
Tauchwehrring (5) in gewissem Abstand um den
gezahnten Einlaufrand (4) angeordnet.

Das geklärte Wasser gelangt - infolge der mit
Flutungswasser (25) vorgenommenen Höheneinstellung - über den geneigten Boden (2) zu einem
zylindrischen Sumpf (6), der mit dem oberen
Boden (2) und dem unteren Boden (1) direkt verschweißt ist. In dem Sumpfbehälter befindet sich
eine eingetauchte Unterwasserpumpe (7). Über
eine flexible Verbindung (8) wird das geklärte Wasser abgeführt. Eine Ausgleich-Bohrung (9) sorgt für
das Kommunizieren der Flüssigkeitsstände außerhalb und innerhalb der Vorrichtung. Zur Lagestabilisierung dienen Trimmgewicht (10) und die höhenverstellbaren Schwimmer (11). Zur Schwallverminderung bzw. Vermeidung von Pendelausschlägen
durch eindringendes Flutungswasser (25) sind vertikale Ringbleche (12) als innere Stabilisatoren (12)
mit unteren Durchlaßöffnungen in dem Hohlkörper
(H) angeordnet.

Zur exakten Standorteinhaltung, die u.a. zur
Vermeidung von Kippmomenten auf die senkrechte
Mittelachse der Klärinsel unabdingbar ist, sind drei
Rohrstative (17) mit Betonfuß (18) unbefestigt auf
dem Beckengrund (19) stehend angeordnet.

An diesen Rohrstativen (17) wird die Vorrichtung mittels Führungshülsen (20) in Abhängigkeit
von den Schwankungen des Flüssigkeitsspiegels
auf- und abwärts unbehindert geführt.

Mit den höhenverstellbaren Schwimmern (11)
wird die Justierung zur horizontalen Schwimmlage
vorgenommen.

Das Fluten zum Absenken in die gewünschte
Schwebetiefe geschieht durch Wasserzufuhr über
Zuleitung (21). Das Lenzen (Anheben) der Vorrichtung kann durch Zuführung von Druckgas (Luft)
über Zuleitung (22) und Ausstoß des Wassers über
Leitung (21) oder durch Absaugen des Wassers
über Zuleitung (21) bei gleichzeitiger Luftzufuhr
über Leitung (22) in den Innenraum erfolgen.

Zur Beheizung gegen Eineisungsgefahr ist eine
Heizschlange (23) vorgesehen.

Die Vorrichtung gemäß der Erfindung weist
eine Reihe von Vorteilen auf.

Die Vorrichtung schafft die Möglichkeit, das
geklärte Wasser aus Absetzbecken oder Gewässern in dünner Schicht über eine lange Wasserlinie
und aus dem optimalen Höhenbereich abzuziehen.
Mit der Vorrichtung erfolgt eine selbsttätige exakte
Angleichung an veränderliche Pegelstände des zu
klärenden Gewässers bzw. Beckens. Damit ist ein
Auffangen des Wassers mit schwankenden Pegeln
und Behandlung bzw. Klärung in ein und demselben Becken möglich. Ferner wird die exakte selbsttätige Einhaltung der einmal gewählten Schichtdicke des abzuziehenden Reinwassers durch die nach dem Schwimmdockprinzip eingestellte Schwebetiefe der Vorrichtung ermöglicht. Des weiteren wird mit der Vorrichtung gemäß der Erfindung jegliche Turbulenz im Sedimentationsbereich vermieden, da die Wasserpumpe quasi indirekt angeordnet ist, eine Abschirmung durch das Tauchwehr und eine lange Wasserüberlaufkante besteht. Schließlich besitzt die Vorrichtung eine ausgesprochen flache Bauweise (etwa 500 mm) bei hervorragender Stabilitätslage infolge Trimmgewichts.

**Ansprüche**

1. Vorrichtung zur Entnahme von geklärtem Wasser aus Gewässern, insbesondere aus Absetzbecken, wobei ein durch Auftriebkörper schwimmfähig gehaltener Entnahmebehälter in das Wasser eingetaucht und von einer ringförmigen Tauchwand in kleinem Abstand umgeben ist, und wobei das geklärte Wasser aus oberflächennahen Schichten durch Öffnungen in oberflächennahen Zonen der Behälterwand in den Entnahmebehälter einströmt und mittels zentral angeordneter Pumpe hieraus entfernt wird, dadurch gekennzeichnet, daß der Entnahmebehälter ein durch höhenverstellbare Schwimmkörper in horizontaler Schwimmlage stabilisierter, flut- und lenzbarer kalottenförmiger Hohlkörper ist.

2. Vorrichtung nach Anspruch 1, dadurch gekennzeichnet, daß der kalottenförmige Hohlkörper an mindestens drei, am Gewässer- oder Beckenboden aufsitzenden Führungsstativen über Führungshülsen höhenverstellbar und selbsttätig dem Niveau anpassend angeordnet ist.

3. Vorrichtung nach den Ansprüchen 1 bis 2, dadurch gekennzeichnet, daß der kalottenförmige Hohlkörper im Bereich des äußeren tiefsten Punktes der Kugelkalotte eine Trimmeinrichtung (Trimmgewicht) sowie eine Öffnung zum Flüssigkeitsausgleich aufweist.

4. Vorrichtung nach den Ansprüchen 1 bis 3, dadurch gekennzeichnet, daß der kalottenförmige Hohlkörper einen zur Mitte hin geneigten Abdeckboden aufweist, der in einen konzentrisch angeordneten und bündig auf der Innenwandung aufsitzenden zylinderförmigen Sumpfteil übergeht.

5. Vorrichtung nach den Ansprüchen 1 bis 4, dadurch gekennzeichnet, daß der Abdeckboden eine Aufkrempung der Randzone aufweist.

6. Vorrichtung nach den Ansprüchen 1 bis 5, dadurch gekennzeichnet, daß die aufgekrempte Randzone mindestens stellenweise gezahnt oder mit Öffnungen versehen ist.

7. Vorrichtung nach den Ansprüchen 1 bis 6, dadurch gekennzeichnet, daß der kalottenförmige Hohlkörper mit Mitteln zum Fluten und Lenzen des Hohlraums versehen ist.

8. Vorrichtung nach den Ansprüchen 1 bis 7, dadurch gekennzeichnet, daß im Innenraum des kalottenförmigen Hohlkörpers vertikale, mit Durchlaßöffnungen versehene konzentrische Ringbleche angeordnet sind.

9. Verwendung der Vorrichtung nach den Ansprüchen 1 bis 8 zum Abtrennen von auf Wasser aufschwimmbaren flüssigen Stoffen.

EP 0 294 002 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 358 514 (A/S FRAMNAE MEK VAERKSTED) <br> * Seite 4, Zeilen 17-37; Seite 5, Zeilen 1-8 * <br> --- | 1,2,9 | B 01 D 21/24 |
| A | DE-C- 653 512 (BAMAG-MEGUIN) <br> * Seite 1 * <br> --- | 1,2,9 | |
| A | CA-A-1 076 038 (CANADIAM MARINE DRILLING) <br> * Seite 6, Zeilen 8-25; Seiten 7,8 * <br> --- | 1,4,6,8,9 | |
| A | US-A-4 243 529 (W.A. STRAUSS) <br> * Spalte 3, Zeilen 36-37; Spalten 8-10 * <br> --- | 1,3,9 | |
| A | GB-A-1 549 343 (J.G. DOUGLAS) <br> * Seite 6, Zeilen 103-130; Seite 7, Zeilen 1-30,95-124 * <br> --- | 1,7,9 | |
| A | US-A-4 305 819 (I.S. KOBOZEV) <br> * Spalte 6, Zeilen 30-34; Spalten 9-10 * <br> --- | 1,6,9 | RECHERCHIERTE SACHGEBIETE (Int. Cl.4) |
| A | FR-A-2 135 009 (PATENTS AND DEVELOPMENTS) <br> --- | | B 01 D <br> C 02 F <br> E 02 B |
| A | DE-A-3 031 412 (NORDENSKJOLD REINHARD) <br> ----- | | |

Der vorliegende Recherchenbericht wurde für alle Patentansprüche erstellt

| Recherchenort | Abschlußdatum der Recherche | Prüfer |
|---|---|---|
| DEN HAAG | 11-07-1988 | DE PAEPE P.F.J. |